# EUROPÄISCHE PATENTSCHRIFT

(11) **EP 4 140 867 B1**
(45) Veröffentlichungstag und Bekanntmachung des Hinweises auf die Patenterteilung: **14.10.2026**
(21) Anmeldenummer: 22191589.5
(22) Anmeldetag: 23.08.2022
(51) Int. Cl.: B62J 43/28, B62J 11/10

(54) **FAHRRADRAHMENELEMENT**
BICYCLE FRAME ELEMENT
ÉLÉMENT CADRE DE BICYCLETTE

(30) Priorität: 27.08.2021 DE 202021104617 U
(43) Veröffentlichungstag der Anmeldung: 01.03.2023
(73) Patentinhaber: Canyon Bicycles GmbH, 56073 Koblenz (DE)
(72) Erfinder: Hensolt, Matthias, 56076 Koblenz (DE)
(74) Vertreter: dompatent

(56) Entgegenhaltungen:
- CN-U- 208 698 987
- DE-A1- 102013 108 313
- DE-A1- 102013 204 557
- JP-A- 2019 202 611
- NL-B1- 2 021 658
- US-A1- 2018 269 439

## Beschreibung

Die Erfindung betrifft ein Fahrradrahmenelement.

Bei Fahrrädern mit Elektroantrieb ist es bekannt, die Batterie in einem Rahmenelement, insbesondere dem Unterrohr des Fahrradrahmens, anzuordnen. Insbesondere sind derartige Fahrradrahmen derart ausgebildet, dass das Unterrohr auf seiner unteren im Bereich der Tretlageraufnahme angeordneten Seite offen ist, sodass die Batterie von unten in den Fahrradrahmen eingeschoben werden kann. Innerhalb des Unterrohrs sind jedoch häufig auch Züge, wie Bowdenzüge für die Schaltung, Hydraulikleitungen für Bremsen, Kabel und dergleichen angeordnet. Zur Anordnung derartiger Züge und dergleichen ist es bekannt, im Unterrohr des Fahrradrahmens abgeschlossenen Röhren vorzusehen, die insbesondere in einen Carbonrahmen einlaminiert sind. Durch diese in sich geschlossenen rohrförmigen Kabelkanäle können die entsprechenden Leitungen, Kabel etc., hindurchgeschoben werden. Allerdings ist der erforderliche Platz bei steigendem Funktionsumfang von Fahrrädern ggf. nicht ausreichend. So ist es erforderlich weitere Kabel und dergleichen beispielsweise für Licht, ABS etc., vorzusehen. Des Weiteren besteht die Problematik, dass die Kabel ggf. große Stecker aufweisen, um beispielsweise mit der Batterie verbunden zu werden. Der Kontakt mit der Batterie erfolgt hierbei häufig im oberen Bereich des Unterrohrs, sodass beim Einschieben der Batterie von unten in das Unterrohr der Kontakt hergestellt wird. Kabel mit relativ großen Steckern können jedoch nicht durch die bekannten rohrförmigen Kabelkanäle geführt werden.

Ein Fahrradrahmenelement mit den Merkmalen des Oberbegriffs des Anspruchs 1 ist aus DE 10 2013 204 557 bekannt.

Aufgabe der Erfindung ist es, ein Fahrradrahmenelement zu schaffen, mit dem es auf einfache und zuverlässige Weise möglich ist, Züge, Kabel und dergleichen anzuordnen bzw. zu montieren.

Die Lösung der Aufgabe erfolgt erfindungsgemäß durch ein Fahrradrahmenelement mit dem Merkmalen des Anspruchs 1.

Das erfindungsgemäße Fahrradrahmenelement weist ein Rahmenrohr auf, bei dem es sich insbesondere um ein Unterrohr eines Fahrradrahmens handelt. Das Rahmenrohr bildet einen Aufnahmeraum für eine Batterie aus. Ferner ist ein sich in Längsrichtung des Aufnahmeraums und somit insbesondere in Längsrichtung einer in den Aufnahmeraum eingesteckten Batterie erstreckendes Kanalelement vorgesehen. Das Kanalelement dient zur Aufnahme von Zügen, wie Bowdenzügen, Hydraulikleitungen, Kabeln und dergleichen. Um eine einfache Montage der Züge und dergleichen in dem Kanalelement durchführen zu können, weist das Kanalelement ein Deckelelement zum Verschließen des Kanalelements auf. Dies hat den Vorteil, dass zunächst bei geöffnetem Kanalelement die Züge, Kabel, Hydraulikleitungen und dergleichen montiert werden können und anschließend das Deckelelement verschlossen wird, sodass bei verschlossenem Deckelelement ein in sich geschlossener Kanal entsteht. Hierdurch ist vermieden, dass beim Ein- und Ausführen der Batterie in das Rahmenrohr Schaltzüge, Kabel und dergleichen beschädigt werden. Andererseits ist durch das Vorsehen eines Deckelelements eine vereinfachte Montage realisiert.

Vorzugsweise ist das Kanalelement innerhalb des Rahmenrohrs angeordnet und erstreckt sich in Längsrichtung des Rahmenrohrs. Bei einer in das Rahmenrohr eingesteckten Batterie entspricht die Längsrichtung des Rahmenrohrs der Längsrichtung der Batterie. Bevorzugt erstreckt sich das Kanalelement über eine Länge innerhalb des Rahmenrohrs, die im Wesentlichen der Länge der Batterie entspricht. Hierdurch ist sichergestellt, dass beim Einschieben oder Herausziehen der Batterie ein Beschädigen von Zügen, Kabeln und dergleichen vermieden ist. Gegebenenfalls kann das Kanalelement insofern auch eine Länge aufweisen, die größer ist als die Länge der Batterie.

In bevorzugter Ausführungsform der Erfindung ist ein Halteelement für den Deckel vorgesehen. Hierbei kann es sich um ein gesondertes Bauteil handeln. Bevorzugt ist es, dass das Halteelement am Deckelelement und/oder am Kanalelement vorgesehen ist. Das Halteelement kann hierbei beispielsweise Rastelemente, bügelförmige Halteelemente oder dergleichen aufweisen.

In besonders bevorzugter Ausführungsform weist das Halteelement eine Nut auf. Diese ist vorzugsweise am Kanalelement angeordnet, sodass das Deckelelement in Längsrichtung zum Verschließen des Kanalelements in die Nut eingeschoben werden kann. Hierdurch ist auf einfache Weise ein Verschließen des Kanalelements möglich.

Ebenso kann die Nut am Deckelelement vorgesehen sein. Der Deckel weist hierbei zur Ausbildung der Nut beispielsweise einen sich in Längsrichtung erstreckenden C-förmigen Querschnitt aufweisenden Ansatz auf. Dieser umgreift einen Ansatz am Kanalelement, sodass das Deckelelement wiederum ein- oder aufschiebbar ist, um das Kanalelement zu verschließen. Selbstverständlich sind auch Kombinationen dieser Ausführungsformen möglich, dass beispielsweise auf einer Seite des Deckelelements die Nut im Kanalelement vorgesehen ist und auf der anderen Seite des Deckelelements die Nut durch das Deckelelement selbst ausgebildet ist. Die Nuten erstrecken sich insbesondere in Längsrichtung des Kanalelements. Das Einschieben oder Herausziehen des Deckelelements erfolgt hierbei insbesondere ebenfalls in Längsrichtung.

Bei einer bevorzugten Weiterbildung der Erfindung weist das Kanalelement mindestens zwei sich insbesondere in Längsrichtung erstreckende Kammern auf. Bevorzugt ist es hierbei, dass jede Kammer mit einem gesonderten Deckelelement verschließbar ist. Hierdurch ist die Montage oder auch die Reparatur weiter vereinfacht.

Erfindungsgemäß sind die Kammern dadurch ausgebildet, dass sie durch einen sich insbesondere in Längsrichtung erstreckenden, Steg voneinander getrennt sind. Hierdurch kann in bevorzugter Weiterbildung der Steg derart ausgebildet sein, dass ein Teil der Halteelemente durch den Steg ausgebildet oder mit dem Steg verbunden ist. Da der Steg in bevorzugter Ausführungsform zwei Kammern voneinander trennt ist es des Weiteren bevorzugt, dass der Steg zwei Halteelemente aufweist, bzw. ausbildet. Diese sind einander gegenüberliegend angeordnet, sodass, je Kammer, ein entsprechendes Halteelement vorgesehen ist. Das Einstecken und Herausziehen von Deckelelementen, je Kammer, erfolgt, wie vorstehend beschrieben, in bevorzugter Weiterbildung und durch das Vorsehen entsprechender Nuten.

Vorzugsweise weist das Kanalelement eine sich in Längsrichtung erstreckende Rückwand auf, deren Außenseite vorzugsweise eine Kontur aufweist, die im Wesentlichen der Kontur einer Innenseite des Rahmenrohrs entspricht. Dies hat den Vorteil, dass das Kanalelement flächig an der Innenseite des Rahmenrohrs anliegt und somit beispielsweise durch Verkleben auf einfache Weise mit dem Rohrelement verbunden werden kann. Anstelle eines Verklebens ist auch ein Verschrauben des Kabelkanals möglich. Hierzu werden Löcher in dem entsprechenden Rahmenrohr vorgesehen, durch die ein Fixieren des Kabelkanals mit Schrauben möglich ist. Dies weist allerdings den Nachteil auf, dass die Schraubenköpfe sichtbar sind. Eine bevorzugte Befestigung des Kabelkanals erfolgt durch ein Verschweißen. Dies ist bei Rahmenrohren aus einem Kunststoffmaterial, wie Carbon oder dergleichen, möglich. Hierzu werden Löcher in das Rahmenrohr gebohrt. Anschließend erfolgt ein Verschweißen des Kabelkanals durch diese Löcher, die sodann mit Schweißraupen verschlossen und verschliffen werden. Eine derartige Befestigung ist nach dem Lackieren des Rahmenrohrs nicht mehr sichtbar.

Bei einem Kanalelement mit mehreren Kammern ist es bevorzugt, dass der Steg an einer Innenseite der Rückwand angeordnet ist und insbesondere mit der Rückwand einstückig ausgebildet ist. Besonders bevorzugt ist es, dass es sich, unabhängig von der Anzahl der Kammern, bei dem Kanalelement um ein Profilelement handelt, dessen Profil sich in Längsrichtung nicht ändert. Insbesondere kann ein derartiges Kanalelement durch Extrusion hergestellt werden. Vorzugsweise ist das Kanalelement aus Kunststoff, Aluminium oder dergleichen hergestellt. Das Herstellen des Kanalelements als Extrusionsprofil hat ferner den Vorteil, dass dieses auf einfache Weise abgelängt werden kann, sodass eine Anpassung an der Länge des Rahmenelements an die Rahmengröße, die verwendete Batterie etc., auf einfache Weise möglich ist.

Bei dem Deckelelementen kann es sich insbesondere um ebenfalls als Profil ausgebildete Elemente handeln, deren Querschnitt sich in Längsrichtung jedenfalls nicht ändert. Die Deckelelemente können aus einem flexibleren Material hergestellt sein, um ein einfaches Einstecken oder Herausziehen in die Halteelemente zu ermöglichen. Vorzugsweise ist das Deckelelement aus einem Kunststoffmaterial hergestellt.

Erfindungsgemäß ist in dem Steg mindestens eine Gewindebohrung vorgesehen. In montiertem Zustand des Kanalelements sind die Gewindebohrungen derart angeordnet, dass sie mit Durchgangsbohrungen im Rahmenrohr fluchten. Die Durchgangsbohrungen können, in Verbindung mit den Gewinden, beispielsweise zur Fixierung des Kanalelements mit Hilfe von Schrauben von der Außenseite dienen. Ebenso können die Gewindebohrungen zur Befestigung von Bauteilen, wie einem Flaschenhalter oder dergleichen, am Rahmenrohr genutzt werden.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht eines Kanalelements mit Deckelelement,
- Fig. 2: eine schematische perspektivische Ansicht des in Figur 1 dargestellten Kanalelements mit Deckelelement und
- Fig. 3: eine schematische Schnittansicht eines Rahmenrohrs mit darin angeordneten Kanalelement mit Deckelelement und einer Batterie.

Das insbesondere als Extrusionsprofil hergestellte Kanalelement 10 weist eine Rückwand 12 auf, die in zwei parallel zueinander verlaufenden Seitenwänden 14 übergeht. Auf einer Innenseite 16 der Rückwand 12 ist ein Steg 18 ausgebildet, der sich ebenfalls vollständig in Längsrichtung 20 erstreckt.

Im dargestellten Ausführungsbeispiel sind zwei Kammern 22 ausgebildet. Die beiden Kammern 22 sind jeweils durch ein Deckelement 24 verschließbar, wobei das Deckelement 24 in Längsrichtung 20 verschiebbar ist.

Zum Halten der Deckelelemente 24 sind Halteelemente 26 vorgesehen. Diese weisen jeweils eine Nut 28 auf, die sich in Längsrichtung 20 erstreckt. In die Nuten 28 kann jeweils ein Deckelelement in Längsrichtung 20 eingeschoben oder herausgezogen werden.

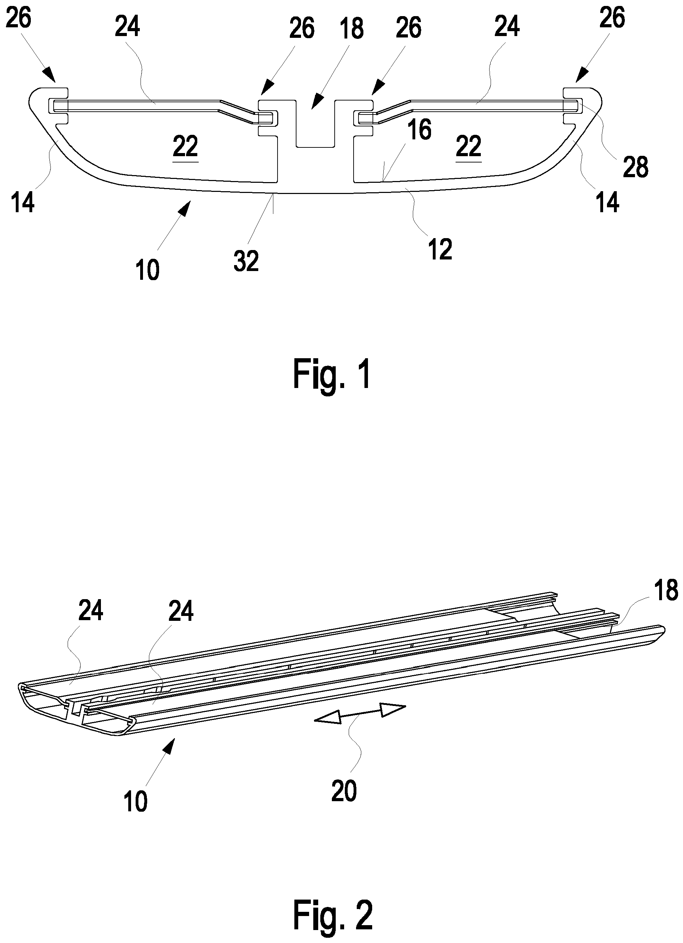

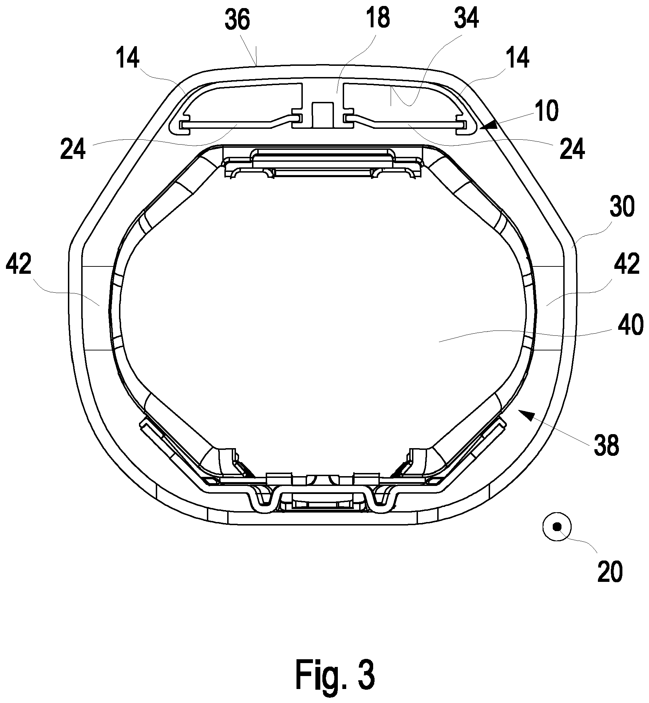

In montiertem Zustand (Fig. 3) ist das Kanalelement 10 im inneren eines Rahmenrohrs wie eines Unterrohrs 30 angeordnet. Hierzu ist die Kontur einer Außenseite 32 (Fig. 1) des Kanalelements 10 im Wesentlichen derart ausgebildet, dass sie der Kontur einer Innenseite 34 des Rahmenrohrs entspricht. Die Außenseite 32 des Kanalelements 10 liegt somit an der Innenseite 34 des Rahmenprofils 30, wie in Figur 3 ersichtlich, an. Die Seitenwände 14 des Kanalelements 10 weisen hierbei ggf. einen geringen Abstand zur Innenseite 34 des Rahmenrohrs 30 auf.

In dem Steg 18 können nicht dargestellte, senkrecht zur Innenseite 34 des Rahmenrohrs 30 verlaufende Gewindebohrungen vorgesehen sein. Mit diesen fluchten ebenfalls nicht dargestellte Durchgangsbohrungen im Rahmenrohr 30. Diese dienen insbesondere zur Fixierung eines Flaschenhalters mittels Schrauben an einer Außenseite 36 des Rahmenrohrs.

Ferner bildet das Rahmenrohr 30 einen Aufnahmeraum 38 aus, der sich in Längsrichtung, d.h. senkrecht zur Zeichenebene der Figur 3, erstreckt. Innerhalb des Aufnahmeraums ist eine Batterie 40 angeordnet, wobei die Lage der Batterie 40 und dem Aufnahmeraum 38 ggf. durch Abstandshalter 42 definiert ist.

Insbesondere vor dem Einschieben der Batterie 40 in den Aufnahmeraum 38 können die Deckelelemente 24 auf einfache Weise herausgezogen werden. In dem sodann offenen Kanäle 22 können auf einfache Weise Leitungen, Züge, Kabel etc., montiert werden. Nach erfolgter Montage oder Reparatur können die Kanäle 22 durch Einschieben der Deckelelemente 24 auf einfache Weise wieder verschlossen werden. Hierdurch sind die in den Kanälen 22 angeordneten Kabelleitungen, Züge, etc., vor Beschädigungen beim Einschieben oder Herausziehen der Batterie 40 geschützt.

## Patentansprüche

1. Fahrradrahmenelement mit
einem in einem Rahmenrohr (30), insbesondere einem Unterrohr eines Fahrradrahmens vorgesehenen Aufnahmeraum (38) für eine Batterie (40),
einen sich in Längsrichtung (20) des Aufnahmeraums (38) erstreckenden Kanalelement (10) für Züge, Kabel, Hydraulikleitungen, etc. und
ein Deckelelement (24) zum Verschließen des Kanalelements (10), wobei das Kanalelement (10) mindestens zwei sich in Längsrichtung (20) erstreckende Kammern (22) aufweist,
die Kammern (22) durch eine sich insbesondere in Längsrichtung (20) erstreckenden Steg (18) voneinander getrennt sind, **dadurch gekennzeichnet, dass** der Steg (18) mindestens eine Gewindebohrung aufweist, die in montiertem Zustand mit Durchgangsbohrungen im Rahmenrohr (30) fluchtet.

2. Fahrradrahmenelement nach Anspruch 1, **dadurch gekennzeichnet, dass** das Kanalelement (10) im Rahmenrohr (30) angeordnet ist und sich insbesondere in Längsrichtung (20) des Rahmenrohrs erstreckt.

3. Fahrradrahmenelement nach Anspruch 1 oder 2, **gekennzeichnet durch** ein sich in Längsrichtung (20) des Kanalelements (10) erstreckendes Halteelement (26) für das Deckelelement (24).

4. Fahrradrahmenelement nach Anspruch 3, **dadurch gekennzeichnet, dass** das Halteelement (26) am Deckelelement (24) und/oder am Kanalelement (10) vorgesehen ist.

5. Fahrradrahmenelement nach Anspruch 3 oder 4, **dadurch gekennzeichnet, dass** das Halteelement (26) als am Kanalelement (10) angeordnete Nut (28) ausgebildet ist, in die das Deckelelement (24) in Längsrichtung (20) einschiebbar ist.

6. Fahrradrahmenelement nach Anspruch 3 bis 5, **dadurch gekennzeichnet, dass** das Halteelement (26) als am Deckelelement (24) angeordnete Nut ausgebildet ist, die mit einem sich in Längsrichtung (20) erstreckenden Ansatz des Kanalelements (10) zusammenwirkt.

7. Fahrradrahmenelement nach Ansprüche 1 bis 6, **dadurch gekennzeichnet, dass** der Steg (18) einen Teil des Halteelements (26) ausbildet, wobei der Steg vorzugsweise zwei Halteelemente (26) aufweist.

8. Fahrradrahmenelement nach Anspruch 1 bis 7, **dadurch gekennzeichnet, dass** das Kanalelement (10) eine sich in Längsrichtung (20) erstreckende Rückwand (12) aufweist, deren Außenseite (32) vorzugsweise eine Kontur aufweist, die im Wesentlichen einer Kontur einer Innenseite (34) des Rahmenrohrs (30) entspricht.

9. Fahrradrahmenelement nach Ansprüche 1 bis 8, **dadurch gekennzeichnet, dass** der Steg (18) an einer Innenseite der Rückwand (12) des Kanalelements (10) angeordnet und vorzugsweise mit der Rückwand (12) einstückig ausgebildet ist.

## Claims

1. A bicycle frame element comprising
a receiving space (38) for a battery (40), the receiving space being provided in a frame tube (30), in particular a down tube of a bicycle frame,
a channel element (10) extending in a longitudinal direction (20) of the receiving space (38) for control cables, electrical cables, hydraulic lines, etc., and
a cover element (24) for closing the channel element (10), wherein the channel element (10) comprises at least two chambers (22) extending in the longitudinal direction (20), the chambers (22) being separated from one another by a web (18) extending in particular in the longitudinal direction (20),
**characterized in that**
the web (18) comprises at least one threaded bore which, when mounted, is aligned with through-bores in the frame tube (30).

2. The bicycle frame element according to claim 1, **characterized in that** the channel element (10) is arranged in the frame tube (30) and extends in particular in the longitudinal direction (20) of the frame tube.

3. The bicycle frame element according to claim 1 or 2, **characterized by** a retaining element (26) for the cover element (24), the retaining element extending in the longitudinal direction (20) of the channel element (10).

4. The bicycle frame element according to claim 3, **characterized in that** the retaining element (26) is provided on the cover element (24) and/or on the channel element (10).

5. The bicycle frame element according to claim 3 or 4, **characterized in that** the retaining element (26) is configured as a groove (28) arranged on the channel element (10), into which groove the cover element (24) is insertable in the longitudinal direction (20).

6. The bicycle frame element according to any one of claims 3 to 5, **characterized in that** the retaining element (26) is configured as a groove arranged on the cover element (24), the groove cooperating with a projection of the channel element (10) extending in the longitudinal direction (20).

7. The bicycle frame element according to any one of claims 1 to 6, **characterized in that** the web (18) forms a part of the retaining element (26), wherein the web preferably comprises two retaining elements (26).

8. The bicycle frame element according to any one of claims 1 to 7, **characterized in that** the channel element (10) comprises a rear wall (12) extending in the longitudinal direction (20), an outer side (32) of the rear wall preferably having a contour which substantially corresponds to a contour of an inner side (34) of the frame tube (30).

9. The bicycle frame element according to any one of claims 1 to 8, **characterized in that** the web (18) is arranged on an inner side of the rear wall (12) of the channel element (10) and is preferably formed integrally with the rear wall (12).

## Revendications

1. Elément cadre de bicyclette avec
un logement (38) pour une batterie (40), prévu dans un tuyau de cadre (30), notamment dans un tuyau inférieur d'un cadre de bicyclette,
un élément canal (10) pour des câbles de commande, des câbles, des conduits hydrauliques etc. et
un élément couvercle (24) pour fermer l'élément canal (10), l'élément canal (10) comprenant au moins deux chambres (22) s'étendant dans la direction longitudinale (20),
les chambres (22) étant séparées les unes des autres par un muret (18) s'étendant plus particulièrement dans la direction longitudinale (20),
**caractérisé en ce que** le muret (18) comprend au moins un trou taraudé qui est aligné, en l'état monté, avec des trous de passage dans le tuyau de cadre (30).

2. Elément cadre de bicyclette selon la revendication 1, **caractérisé en ce que** l'élément canal (10) est disposé dans le tuyau de cadre (30) et s'étend notamment en direction longitudinale (20) du tuyau de cadre.

3. Elément cadre de bicyclette selon la revendication 1 ou 2, **caractérisé par** un élément de maintien (26) pour l'élément couvercle (24) s'étendant en direction longitudinale (20) de l'élément canal (10).

4. Elément cadre de bicyclette selon la revendication 3, **caractérisé en ce que** l'élément de maintien (26) est prévu à l'élément couvercle (24) et/ou à l'élément canal (10).

5. Elément cadre de bicyclette selon la revendication 3 ou 4, **caractérisé en ce que** l'élément de maintien (26) est configuré comme une rainure (28) disposée à l'élément canal (10) et dans laquelle l'élément couvercle peut être introduit en direction longitudinale (20).

6. Elément cadre de bicyclette selon la revendication 3 à 5, **caractérisé en ce que** l'élément de maintien (26) est configuré comme une rainure (28) disposée à l'élément couvercle (24) et qui agit de concert avec une saillie de l'élément canal (10) s'étendant en direction longitudinale (20).

7. Elément cadre de bicyclette selon l'une des revendications 1 à 6, **caractérisé en ce que** le muret (18) forme une partie de l'élément de maintien (26), le muret comprenant de préférence deux éléments de maintien (26).

8. Elément cadre de bicyclette selon la revendication 1 à 7, **caractérisé en ce que** l'élément canal (10) comprend une paroi arrière (12) s'étendant en direction longitudinale (20), dont le côté extérieur (32) comprend de préférence un contour qui correspond essentiellement à un contour d'un côté intérieur (34) du tuyau de cadre (30).

9. Elément cadre de bicyclette selon l'une des revendications 1 à 8, **caractérisé en ce que** le muret (18) est disposé à un côté intérieur de la paroi arrière (12) de l'élément canal (10) et est formé d'une pièce avec la paroi arrière (12).
